# EUROPÄISCHE PATENTSCHRIFT

(11) **EP 2 285 255 B1**
(45) Veröffentlichungstag und Bekanntmachung des Hinweises auf die Patenterteilung: **28.03.2012**
(21) Anmeldenummer: 09761226.1
(22) Anmeldetag: 08.05.2009
(51) Int. Cl.: A47J 31/20

(54) **STEMPELFILTER-GETRÄNKEBEREITER MIT VERSCHLIESSBARER AUSGIESSÖFFNUNG**
PLUNGER-FILTER BEVERAGE-MAKING MACHINE WITH A CLOSABLE POURING OPENING
DISPOSITIF DE PRÉPARATION DE BOISSONS À FILTRE PISTON AVEC OUVERTURE DE VERSEMENT OBTURABLE

(30) Priorität: 10.06.2008 CH 874082008
(43) Veröffentlichungstag der Anmeldung: 23.02.2011
(73) Patentinhaber: PI-DESIGN AG, 6234 Triengen (CH)
(72) Erfinder: BODUM, Jørgen, CH-6045 Meggen (CH)
(74) Vertreter: Detken, Andreas
(86) Internationale Anmeldenummer: PCT/CH2009/000152
(87) Internationale Veröffentlichungsnummer: WO 2009/149568

(56) Entgegenhaltungen:
- EP-A- 1 230 882
- DE-C- 540 273
- DE-U1- 29 611 746
- US-A- 5 240 145
- US-A- 6 079 316

## Beschreibung

### TECHNISCHES GEBIET

Die vorliegende Erfindung betrifft einen Getränkebereiter mit einem nach oben offenen Gefäss und einem darin verschiebbar angeordneten Filterkolben. Derartige Getränkebereiter werden allgemein als Stempelfilter-Getränkebereiter oder als "French Press"-Getränkebereiter bezeichnet. Derartige Getränkebereiter können zur Zubereitung von Kaffee, Tee usw. oder zum Aufschäumen von z.B. Milch verwendet werden.

### STAND DER TECHNIK

Aus dem Stand der Technik sind "French Press"-Kaffeebereiter seit langem bekannt. Diese umfassen normalerweise ein zylindrisches Glasgefäss, in dem ein Filterkolben verschiebbar angeordnet ist. Der Filterkolben umfasst eine Kolbenstange, an deren unterem Ende ein Stempelfilter mit einem feinen Draht- oder Kunststoffnetz angebracht ist. Die Kolbenstange ist durch einen Deckel hindurchgeführt, der das Gefäss nach oben hin überdeckt.

Zur Zubereitung von beispielsweise Kaffee werden gemahlene Kaffeebohnen in das Gefäss gegeben und mit heissem Wasser aufgegossen. Die Mischung wird einige Minuten stehengelassen. Anschliessend wird der Filterkolben in das Gefäss eingesetzt und hinabgedrückt. Dabei trennt der Stempelfilter den trinkfertigen Kaffee vom ausgelaugten Kaffeepulver.

Zum Ausgiessen des Kaffees ist am oberen Rand des Gefässes normalerweise ein schnabelartiger Ausgiesser ausgebildet. Der Deckel weist meist als Spritzschutz eine umlaufende Schürze auf, die sich in das Innere des Gefässes hinein erstreckt. In der Schürze sind (meist schlitzförmige) Durchbrechungen vorhanden, um das Ausgiessen des Kaffees durch die Durchbrechungen hindurch über den Ausgiesser zu ermöglichen.

Um zu vermeiden, dass sich ein Benutzer beim Hinunterdrücken des Stempelfilters durch herausspritzende heisse Flüssigkeit verbrühen kann, werden die Durchbrechungen der Schürze normalerweise beim Hinunterdrücken des Filterkolbens vom Ausgiesser weggedreht und erst unmittelbar vor dem Ausgiessen in den Bereich des Ausgiessers gebracht. Ein Benutzer kann dies jedoch leicht vergessen. Daher besteht immer eine gewisse Gefahr, dass entweder heisse Flüssigkeit herausspritzt, weil der Benutzer vergessen hat, vor dem Hinunterdrücken die Durchbrechungen vom Ausgiesser wegzudrehen, oder dass der fertige Kaffee verschüttet wird, weil der Benutzer nach dem Herunterdrücken vergisst, die Durchbrechungen wieder in Überlappung mit dem Ausgiesser zu bringen, und der Kaffee daher unkontrolliert zwischen Gefässwand und Deckel austritt.

US 6,295,920 offenbart einen Stempelfilter-Kaffeebereiter, dessen Ausgiesser mit einer schwenkbaren Klappe abgedeckt ist. Diese schwenkt beim Ausgiessen durch den Druck des austretenden Kaffees nach oben und gibt so den Ausgiesser frei. Eine solche Klappe ist jedoch unbefriedigend, weil die Klappe beim Ausgiessen notwendigerweise vom Kaffee benetzt wird und dabei die Strömung des Kaffees verändert, so dass die Gefahr besteht, dass Kaffee beim Ausgiessen oder danach vom Ausgiesser herabtropft.

### DARSTELLUNG DER ERFINDUNG

Es ist also eine Aufgabe der vorliegenden Erfindung, einen Stempelfilter-Getränkebereiter anzugeben, bei dem diese Probleme vermieden werden, der also einen Spritzschutz beim Herabdrücken des Stempelfilters bei hoher Bediensicherheit gewährleistet, ohne dass die Gefahr des Nachtropfens besteht. Es ist eine weitere Aufgabe der Erfindung, einen derartigen Getränkebereiter anzugeben, bei dem Wärmeverluste durch den Deckel minimiert sind.

Diese Aufgabe wird durch einen Getränkebereiter mit den Merkmalen des Anspruchs 1 gelöst. Vorteilhafte Ausgestaltungen sind in den abhängigen Ansprüchen angegeben.

Die vorliegende Erfindung stellt also einen Getränkebereiter mit den folgenden Merkmalen zur Verfügung:
ein nach oben offenes, im Wesentlichen zylindrisches Gefäss aus einem hitzebeständigen Material, insbesondere Glas, mit einem Gefässboden und einer umlaufenden Seitenwand;
einen im Gefäss vertikal verschiebbaren Filterkolben mit einer Kolbenstange, an deren oberem Ende ein Betätigungselement, z.B. in Form eines Griffknopfes, angebracht ist und an deren unterem Ende ein Stempelfilter angebracht ist, welcher geeignet ist, den Durchtritt von Flüssigkeit zu erlauben und dabei Feststoffe zurückzuhalten; sowie
einen Deckel, welcher von der Kolbenstange durchsetzt ist und welcher eine das Gefäss nach oben hin zumindest teilweise überdeckende Deckwand aufweist, die gemeinsam mit dem Gefäss einen Gefässinnenraum begrenzt.

Am Deckel oder am Gefäss ist ausserhalb des Gefässinnenraums ein Ausgiesser ausgebildet. Der Deckel weist eine zwischen der Kolbenstange und dem Ausgiesser angeordnete, die Deckwand durchbrechende Ausgiessöffnung auf, welche eine Verbindung zwischen dem Gefüssinnenraum und dem Ausgiesser bildet, um Flüssigkeit durch die Ausgiessöffnung hindurch über den Ausgiesser aus dem Gefäss auszugiessen. Am Deckel ist ein sich oberhalb der Deckwand quer zur Kolbenstange erstreckender; langgestreckter Hebel um eine horizontale Achse schwenkbar angebracht. Im Bereich seines vorderen Endes weist der Hebel einen Verschlusskörper auf, um die Ausgiessöffnung zu verschliessen, und im Bereich seines hinteren Endes weist der Hebel einen Betätigungsbereich auf, um den Hebel durch Druck mit einem Finger eines Benutzers von einer ersten Stellung, in welcher der Verschlusskörper die Ausgiessöffnung verschliesst, in eine zweite Stellung, in welcher der Verschlusskörper die Ausgiessöffnung freigibt, zu verschwenken.

Auf diese Weise ist im Deckel ein Ventil ausgebildet, das sich sehr einfach gezielt öffnen und schliessen lässt. Der Gefässinnenraum ist vollständig verschlossen, solange der Benutzer nicht bewusst den Hebel betätigt, um das Ventil zu öffnen. Eine Fehlbedienung, die zum Verspritzen des Getränks beim Hinunterdrücken des Filterkolbens führen könnte, ist dadurch praktisch ausgeschlossen. Zudem ist gewährleistet, dass nicht unnötig Wärme durch die Ausgiessöffnung hindurch verloren geht.

Aus US 6,755,120 oder US 6,997,104 sind zwar wärmeisolierte Kaffeekannen bekannt, in deren Deckel ein Ventil angeordnet ist, welches durch Druck auf ein oberhalb des Handgriffs der Kanne befindliches Betätigungselement über einen Hebelmechanismus geöffnet werden kann. Diese Kaffeekannen sind jedoch für Filterkaffeemaschinen vorgesehen, bei denen Kaffeepulver in einen oberhalb der Kanne angeordneten Filter eingehüllt wird und mit heissem Wasser übergossen wird, das den Kaffee extrahiert und als fertiges Getränk durch den Filter hindurch in die darunter befindliche Kaffeekanne gelangt. Das Ventil muss hier eine Doppelfunktion erfüllen, nämlich einerseits beim Aufbrühen des Kaffees den Zulauf gewährleisten und andererseits das Ausgiessen des fertigen Getränks ermöglichen. Dadurch sind diese Ventile verhältnismässig kompliziert konstruiert, während das Ventil der vorliegenden Erfindung im Vergleich dazu sehr einfach aufgebaut ist. Diese Lösungen sind zudem nicht auf Stempelfilter-Kaffeekannen übertragbar, da das Ventil bei den bekannten Kannen zentral angeordnet ist und keine Durchführung einer zentralen Kolbenstange erlauben würde.

Unter dem Begriff "im Wesentlichen zylindrisches Gefäss" ist zu verstehen, dass das Gefäss über einen erheblichen Teil seiner Länge von zylindrischer Grundform ist. Das Gefäss kann sich aber z.B. in seinem oberen Randbereich aufweiten. Der Ausgiesser ist vorzugsweise am Deckel ausgebildet. Wenn die Deckwand des Deckels aber genügend weit innerhalb des Gefässes angeordnet ist, ist auch denkbar, den Ausgiesser am Gefäss selbst auszubilden. Das Gefäss kann optional in einem Halter, der das Gefäss zumindest teilweise umgreift und einen Handgriff aufweist, gehalten sein, wie dies an sich seit langem in verschiedensten Varianten bekannt ist. Das Gefäss kann aber z.B. auch selbst einen integrierten Handgriff aufweisen, der z.B. einstückig mit dem Gefäss aus Glas oder Kunststoff gefertigt sein kann.

Vorzugsweise ist der Hebel in Richtung seiner ersten Stellung federbelastet, um sicherzustellen, dass die Ausgiessöffnung verschlossen ist, solange der Hebel nicht bewusst betätigt wird. Stattdessen kann der Hebel aber auch so ausgebildet sein, dass die Ausgiessöffnung allein aufgrund der Gewichtskraft des Hebels und des Verschlusskörpers verschlossen ist, solange kein Druck auf den Betätigungsbereich ausgeübt wird.

Bevorzugt ist zur Erzeugung der Federkraft eine Druckfeder vorhanden. Diese ist vorzugsweise in einem dem Ausgiesser abgewandten, hinteren Bereich des Deckels zwischen dem Hebel und der darunter gelegenen Deckwand angeordnet, um den Hebel in Richtung seiner ersten Stellung mit einer Federkraft zu beaufschlagen. Eine solche Feder kann aber auch in einem dem Ausgiesser benachbarten Bereich des Hebels zwischen dem Hebel und einem oberhalb des Hebels angeordneten Deckelbereich angeordnet sein.

Sofern die Druckfeder im hinteren Deckelbereich angeordnet ist, ist vorzugsweise in der Deckwand eine topfförmige, sich zum Gefässinneren hin erstreckende Vertiefung (Federaufnahme) ausgebildet, in welche hinein sich die Druckfeder erstreckt. Auf diese Weise ist die Druckfeder gegen seitliche Verschiebungen oder gar Herausfallen gesichert, und es wird eine genügend grosse Federlänge für den benötigten Federweg ermöglicht.

Um die Kolbenstange durch den Deckel durchzuführen, weist der Hebel vorzugsweise eine Durchgangsöffnung auf, durch welche hindurch sich die Kolbenstange erstreckt. Stattdessen kann der Hebel aber auch seitlich um die Kolbenstange herumgeführt sein.

Der Hebel ist vorzugsweise über Lagerelemente, die unmittelbar mit der Deckwand verbunden sind, am Deckel horizontal schwenkbar gelagert. Der Hebel weist bevorzugt eine sich quer zur Längsrichtung des Hebels erstreckende Lagerachse, z.B. in Form eines durchgehenden Stiftes, oder zwei koaxial angeordnete, sich quer zur Längsrichtung des Hebels nach aussen erstreckende Lagerzapfen auf. Zur Befestigung weist dann der Deckel vorzugsweise zwei einander gegenüberliegende, maulförmige Lagerelemente zur Aufnahme der Lagerachse bzw. der Lagerzapfen auf, und die Lagerachse bzw. die Lagerzapfen sind unter Überwindung einer elastischen Federkraft in die Lagerelemente einklickbar. Dadurch ist eine einfache Erstellung und Wartung gewährleistet. Der Hebel kann aber auch auf eine andere Art schwenkbar am Deckel gelagert sein, z.B. über eine zentral in einer Öffnung des Hebels angeordnete Achse, die in ein einziges zentrales Lagerelement eingeführt ist, wie dies an sich bekannt ist.

Um eine wirksame Abdichtung der Ausgiessöffnung zu gewährleisten, ist der Verschlusskörper bevorzugt aus einem Material gefertigt, welches weicher ist (auf der Shore-A-Skala) als das Material des restlichen Hebels. Insbesondere kann der Verschlusskörper aus Silikonkunststoff bestehen. Er ist bevorzugt in eine Öffnung oder Ausnehmung im Bereich des vorderen Endes des Hebels eingesetzt, kann aber z.B. auch in einem Zweikomponenten-Spritzgussverfahren gemeinsam mit dem restlichen Hebel gefertigt sein. Der Verschlusskörper kann gegebenenfalls auch aus dem selben Material wie der restliche Hebel bestehen und einstückig mit diesem gefertigt sein, insbesondere wenn schon durch die Formgebung von Verschlusskörper und Öffnung eine genügende Abdichtung gewährleistet ist.

Der Deckel weist vorzugsweise eine sich vertikal nach unten erstreckende umlaufende Schürze auf, welche sich in den Gefässinnenraum hinein erstreckt, wie dies bei den Deckeln von handelsüblichen Stempelfilter-Kaffeekannen schon heute meist der Fall ist. Um eine wirksame Abdichtung zwischen Gefäss und Deckel herzustellen, ist bevorzugt an der Aussenseite der Schürze ein umlaufendes Dichtelement angeordnet, welches dichtend innen an der Seitenwand des Gefässes anliegt. Das Dichtelement kann insbesondere die Form eines Rings aus einem gegenüber dem restlichen Deckelmaterial weicheren Material, z.B. Silikonkunststoff, annehmen, und kann eine sich radial nach aussen erstreckende Dichtlippe aufweisen. Um das Einsetzen des Dichtelements zu erleichtern, kann sich das Gefäss am oberen Rand leicht aufweiten.

Die das Gefäss nach oben hin begrenzende Deckwand des Deckels ist vorzugsweise im Wesentlichen eben ausgebildet. Um vom Ausgiesser her zurücklaufende Flüssigkeit im Bereich der Ausgiessöffnung zurückzuhalten, kann in einem die Ausgussöffnung umgebenden Bereich ein nach oben vorstehender Rückhaltesteg ausgebildet sein, welcher sich ausgehend vom Ausgiesser teilweise um die Ausgiessöffnung herum erstreckt.

Der Deckel ist bevorzugt zweiteilig aufgebaut, d.h. der Deckel umfasst bevorzugt ein Deckelunterteil, welches die den Gefässinnenraum begrenzende Deckwand bildet, und ein davon getrennt ausgebildetes, das Deckelunterteil und den Hebel zumindest teilweise überdeckendes Deckeloberteil. Um die Kolbenstange möglichst präzise und stabil vertikal zu führen, ist dann vorzugsweise an einem der Deckelteile ausgewählt aus Deckelunterteil und Deckeloberteil eine zylindrische Führungshülse ausgebildet, welche derart im anderen Deckelteil gehalten ist, dass die Führungshülse gegen eine seitliche Kippbewegung gesichert ist. Die Führungshülse kann insbesondere mit dem anderen Deckelteil verrastbar sein.

Eine einfache Konstruktion resultiert, wenn die Führungshülse einstückig mit den Deckeloberteil ausgebildet ist und sich vertikal nach unten durch die den Gefässinnenraum begrenzende Deckwand hindurch in den Gefässinnenratim hinein erstreckt, und wenn zwischen der Führungshülse und der Deckwand eine lösbare Rastverbindung ausgebildet ist, z.B. in Form von auf der Aussenseite der Führungshülse ausgebildeten Rastnocken, die unter die Deckwand des Deckelunterteils greifen.

### KURZE BESCHREIBUNG DER ZEICHNUNGEN

Bevorzugte Ausführungsformen der Erfindung werden im Folgenden anhand der Zeichnungen beschrieben, in denen zeigen:
- Fig. 1: eine perspektivische Ansicht eines "French-Press"-Getränkebereiters;
- Fig. 2: eine perspektivische Ansicht des Deckels (teilweise) und des Filterkolbens des Getränkebereiters der Fig. 1;
- Fig. 3: einen zentralen Längsschnitt in der Ebene A-A durch den Getränkebereiter der Fig. 1;
- Fig. 4: einen zentralen Längsschnitt in der Ebene A-A durch den Deckel des Getränkebereiters der Fig. 1;
- Fig. 5: einen dezentralen Längsschnitt in der Ebene B-B durch den Deckel des Getränkebereiters der Fig. 1; sowie
- Fig. 6: eine Seitenansicht des Deckels der Figuren 4 und 5.

### BESCHREIBUNG BEVORZUGTER AUSFÜHRUNGSFORMEN

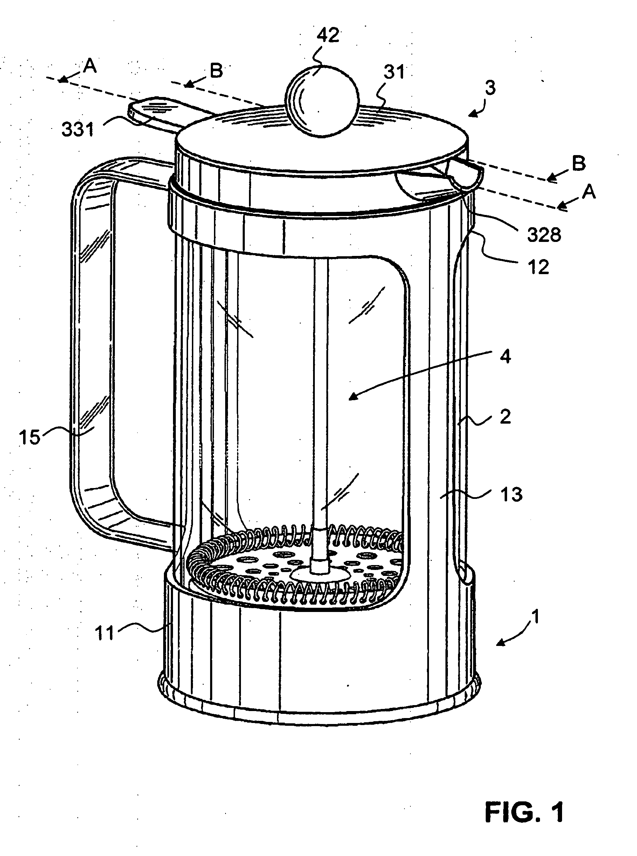

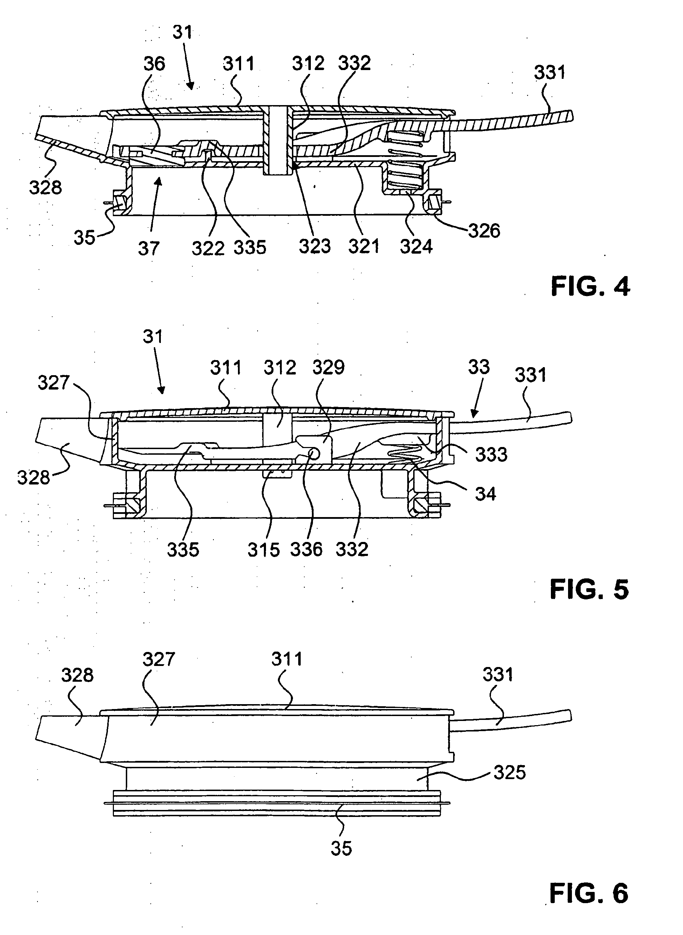

In den Figuren 1 bis 6 ist ein bevorzugtes Ausführungsbeispiel eines erfindungsgemässen Getränkebereiters in Form einer Stempelfilter-Kaffeekanne in verschiedenen Darstellungen gezeigt.

Der Getränkebereiter umfasst einen Halter 1 aus Kunststoff, ein darin gehaltenes, im Wesentlichen zylindrisches Gefäss 2, einen Deckel 3 sowie einen Filterkolben 4. In der Fig. 1 ist das Gefäss transparent dargestellt und besteht insbesondere aus hitzebeständigem Glas; es kann jedoch auch z.B. aus Kunststoff oder Metall bestehen.

Der Halter 1 umfasst einen oberen, die Seitenwand 21 des Gefässes umgreifenden Haltering 12 und einen unteren Haltering 11, der in einen nach unten hin durch eine kreisförmige zentrale Öffnung durchbrochenen Boden übergeht. Die Halteringe sind durch zwei sich in der Längsichtung des Gefässes erstreckende Längsstreben 13 miteinander verbunden. Ebenfalls mit den Halteringen 11, 12 verbunden ist ein Handgriff 15 zum Ergreifen des Getränkebereiters.

Das nach oben offene Gefäss 2 besteht aus einem leicht nach oben gewölbten Boden 22 und einer umlaufenden Seitenwand 21 von kreiszylindrischer Grundform. Anders als bei den meisten Kaffeebereitern des Standes der Technik ist in der Seitenwand kein Ausgiesser ausgebildet. Die Seitenwand endet ungefähr bündig mit-dem oberen Haltering 12 des Halters 1.

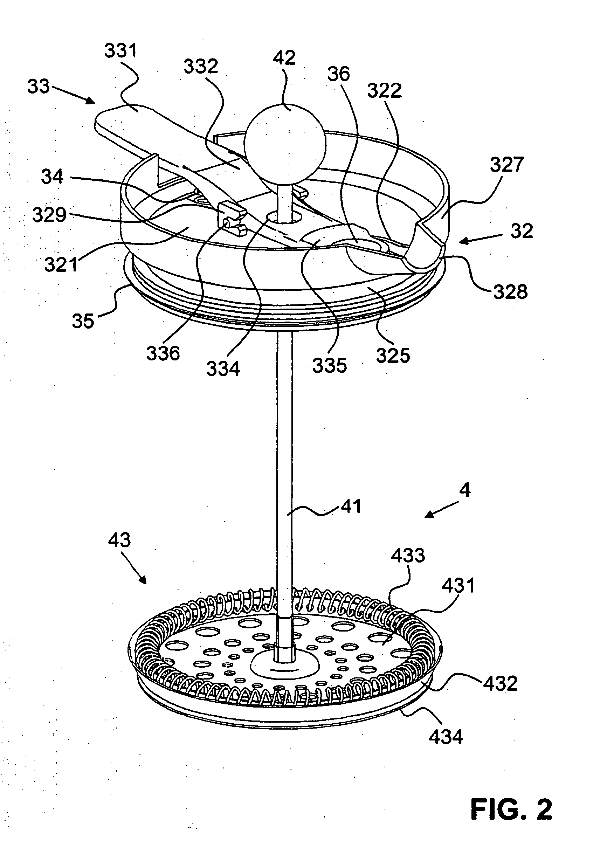

In das Gefäss 2 ist der Deckel 3 eingesetzt. Dieser ist zweiteilig aufgebaut und umfasst ein Deckelunterteil 32 und ein Deckeloberteil 31. In der Fig. 2 ist das Deckeloberteil nicht dargestellt. Das Deckelunterteil 32 weist eine im Wesentlichen ebene Deckwand 321 auf, die die obere Gefässöffnung weitgehend überdeckt und zusammen mit dem Gefäss 2 einen Gefässinnenraum 23 begrenzt. In der Deckwand 321 ist eine Ausgiessöffnung 37 ausgebildet, die in den Figuren 2, 3 und 4 erkennbar ist und dort durch einen Verschlusskörper 36 dichtend verschlossen ist. Nach hinten hin ist die Ausgiessöffnung 37 von einem Rückhaltesteg 322 umgeben, die beidseitig an einem schnabelartigen Ausgiesser 328 endet und so verhindert, dass Flüssigkeit, die möglicherweise vom Ausgiesser in Richtung der Ausgiessöffnung zurückläuft, in den restlichen Deckelbereich gelangt.

Ausgehend von der Deckwand 321 erstreckt sich an deren äusserem Rand eine zylindrische Seitenwand 327 nach oben, die vom Ausgiesser 328 sowie von einer Ausnehmung für einen Hebel 33 unterbrochen wird. Ebenfalls ausgehend von der Deckwand 321 erstreckt sich eine umlaufende, zylindrische Schürze 325 von etwas geringerem Durchmesser nach unten in das Gefäss hinein. Von der Schürze aus erstreckt sich ein Paar ringförmiger, beabstandeter Stege nach aussen, die eine Aufnahme 326 für eine umlaufende, ringförmige Dichtung 35 mit einer radial nach aussen vorstehenden Dichtlippe bilden. Hierdurch wird der Deckel 3 nach dem Einstecken einerseits relativ fest im Gefäss 2 gehalten, und andererseits wird eine Abdichtung zwischen dem Gefäss und dem Deckel gebildet, die verhindert, dass Flüssigkeit zwischen Gefäss und Deckel austreten kann.

Der langgestreckt geformte Hebel 33 ist schwenkbar am Deckelunterteil 32 befestigt. Dazu weist er an einem zentralen Hauptabschnitt 332 zwei lateral vorstehende, koaxiale, horizontale Lagerzapfen 336 auf, die in zwei maulförmige, nach vorne, d.h. in Richtung des Ausgiessers 328, hin offene Lagerelemente 329 eingeklickt sind. Die Lagerelemente 329 sind einstückig mit dem Deckelunterteil ausgebildet. Die Maulöffnung ist am vorderen Ende etwas kleiner als der Zapfendurchmesser, und die Lagerelemente sind leicht elastisch ausgebildet, um das Einklicken zu ermöglichen.

In Richtung seines vorderen, dem Ausgiesser zugewandten Endes weist der Hebel 33 zurächst eine bogenartig nach oben vorgewölbte Kontur auf, um den Rückhaltesteg 322 zu überwinden. Im anschliessenden vorderen Endbereich des Hebels ist eine runde Öffnung ausgebildet, in die der Verschlusskörper 37 eingesetzt ist. Während der Hebel 33 selbst, ebenso wie der restliche Deckel, aus einem schlagzähen und relativ harten Kunststoff wie z.B. Polyproyplen gefertigt ist, besteht der Verschlusskörper 37 aus einem verhältnismässig weichen Material, z.B. Silikonkunststoff, um eine gute Dichtwirkung zu erzielen.

An seinem hinteren, dem Ausgiesser abgewandten Ende steht der Hebel 33 mit einem Betätigungsbereich 331 aus dem Deckelunterteil 32 heraus radial vor und lässt sich durch Druck mit dem Daumen des Benutzers nach unten leicht um seine horizontale Schwenkachse verschwenken, so dass der Verschlusskörper 36 von der Ausgiessöffnung 37 abgehoben wird und die Ausgiessöffuung freigibt.

Mittels einer auf Druck wirkenden Schraubenfeder 34 ist der Hebel in die verschliessende Stellung vorbelastet. Die Schraubenfeder 34 ist im hinteren, dem Ausgiesser abgewandten Bereich des Hebels, aber noch innerhalb der Seitenwand 327 des Deckelunterteils angeordnet. Sie ist in einer topfförmigen Vertiefung 324 der Deckwand 331 aufgenommen, die einen grösseren Federweg ermöglicht, als dies ohne eine solche Vertiefung möglich wäre. Nach oben hin greift sie, in eine ringförmige Federaufnahme 333 an der Unterseite des Hebels 33 ein. Durch die Vertiefung 324 und die Federaufnahme 333 ist die Feder gegen seitliche Verschiebungen oder gar ein Herausspringen gesichert.

Das Deckeloberteil 31 überdeckt mit seiner oberen Deckwand 311 den oberen Rand der Seitenwand 327 des Deckelunterteils 32. Von einer zentralen Öffnung der oberen Deckwand aus erstreckt sich eine einstückig mit der oberen Deckwand gefertigte Führungshülse 312 vertikal nach unten, in welcher die Kolbenstange 41 des Filterkolbens 4 geführt ist. Der Hebel 33 und die untere Deckwand 321 des Deckelunterteils 32 weisen jeweils eine Durchgangsöffnung auf, durch welche hindurch sich die Führungshülse 312 erstreckt. Dabei ist die Durchgangsöffnung des Hebels 33 genügend gross, um die Schwenkbewegung des Hebels nicht zu behindern. Die Durchgangsöffnung der unteren Deckwand 321 ist dagegen passgenau zur Führungshülse 312. Im Bereich des unteren Endes der Führungshülse sind mehrere flache, kugelsegmentförmige Rastnocken 315 auf der Oberfläche der Führungshülse ausgebildet, die nach dem Einstecken der Führungshülse eine lösbare Rastverbindung zwischen Führungshülse 312 und Deckelunterteil 32 bilden. Dadurch ist die Führungshülse an zwei unterschiedlichen vertikalen Stellen gegen seitliche Verschiebungen und somit gegen Kippbewegungen gesichert. Dadurch wird einerseits die vertikale Führung der Kolbenstange 41 verbessert, und andererseits wird das Risiko reduziert, dass die Verbindung zwischen der oberen Deckwand 311 und der Führungshülse 312 bricht.

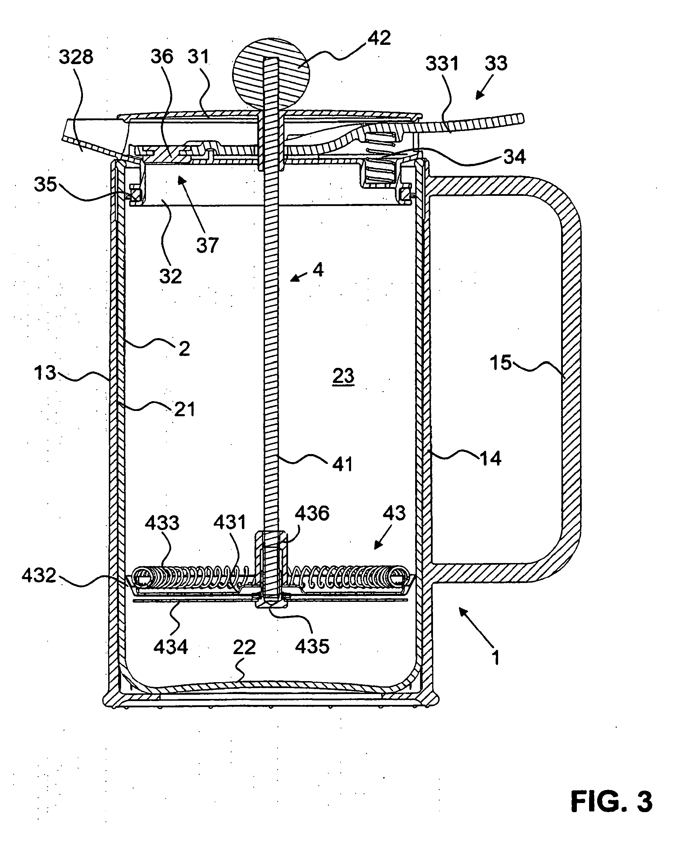

Der Filterkolben weist am oberen Ende der Kolbenstange 41 einen Knopf 42 als Betätigungselement auf. Am unteren Ende ist ein Stempelfilter 43 von an sich bekannter Bauart an der Kolbenstange angebracht. Der Stempelfilter umfasst eine obere Lochplatte 431, die an ihrem äusseren Rand hochgezogen und mit einer Vielzahl von kleinen Öffnungen versehen ist. Durch diese Öffnungen ist eine toroidale Drahtspule 433 gefädelt. Ein feines Drahtnetz 432 liegt auf der Unterseite der Lochplatte auf und ist über die Drahtspule 433 hinweg nach oben gezogen. Das Drahtnetz ist mit einer unterhalb des Drahtnetzes parallel zur Lochplatte angebrachten, stern- oder lochplattenartigen Fixierplatte 434 nach unten hin fixiert. Mit einer gemeinsamen Fixierschraube 435, die in eine (nur in der Fig. 3 dargestellte) Gegenmutter 436 eingreift, sind die Lochplatte 431, das Drahtnetz 432 und die Fixierplatte 434 an der Kolbenstange gesichert.

Die Erfindung ist selbstverständlich nicht auf das vorstehende Beispiel beschränkt, und eine Vielzahl von Abwandlungen sind möglich. So kann insbesondere der Hebel in seiner Form : und Anordnung auch anders ausgestaltet sein. Beispielsweise braucht der Betätigungsbereich nicht radial ausserhalb des Deckelunterteils angeordnet zu sein, sondern kann auch innerhalb des Deckelunterteils liegen und von oben her durch eine Aussparung oder Öffnung im Deckeloberteil zugänglich sein. Selbstverständlich kann der Stempelfilter in einer anderen Art als vorstehend dargestellt ausgebildet sein, z.B. mit einem Kunststoffnetz, das in einen Kunststoffrahmen eingegossen ist, wie dies an sich aus dem Stand der Technik bekannt ist. Statt des in den Zeichnungen dargestellten Gefässhalters kann auch ein beliebiger anderer Halter verwendet werden, oder der Halter kann auch ganz entfallen, wenn z.B. das Gefäss einen angeformten Handgriff aufweist. Eine Vielzahl weiterer Abwandlungen ist möglich. Insbesondere versteht es sich von selbst, dass die vorstehend beschriebenen Ausgestaltungen des Hebels und der Kolbenführung unabhängig voneinander und unabhängig von weiteren Merkmalen vorteilhaft einsetzbar sind.

### BEZUGSZEICHENTABELLE

- 1: Halter
- 11: unterer Ring
- 12: oberer Ring
- 13, 14: Längsstrebe
- 15: Haltegriff
- 2: Glasgefäss
- 21: Seitenwand
- 22: Boden
- 3: Deckel
- 31: Deckeloberteil
- 311: Deckwand
- 312: Führungshülse
- 315: Rastnocken
- 32: Deckelunterteil
- 321: Boden
- 322: Rückhaltesteg
- 323: Öffnung
- 324: Vertiefung
- 325: Schürze
- 326: Dichtungsaufnahme
- 327: Seitenwand
- 328: Ausgiesser
- 329: Achsaufnahme
- 33: Verschlusshebel
- 331: Betätigungsbereich
- 332: Hauptabschnitt
- 333: Federaufnahme
- 334: Öffnung
- 335: gebogener Bereich
- 336: Achse
- 34: Druckfeder
- 35: Dichtring
- 36: Stopfen
- 37: Ausgiessöffnung
- 4: Stempelfilter
- 41: Kolbenstange
- 42: Betätigungsknopf
- 43: Filterplatte
- 431: Grundplatte
- 432: Drahtnetz
- 433: Drahtspule
- 434: Fixierplatte
- 435: Fixierschraube
- 436: Gegenmutter

## Patentansprüche

1. Getränkebereiter, umfassend
ein nach oben offenes, im Wesentlichen zylindrisches Gefäss (2) mit einem Gefässboden (22) und einer umlaufenden Seitenwand (21);
einen im Gefäss (2) vertikal verschiebbaren Filterkolben (4) mit einer Kolbenstange (41), an deren oberem Endes ein Griffelement (42) angebracht ist und an deren unterem Ende ein Stempelfilter (43) angebracht ist, welcher geeignet ist, den Durchtritt von Flüssigkeit zu erlauben und dabei Feststoffe zurückzuhalten;
einen Deckel (3), welcher von der Kolbenstange (41) durchsetzt ist und welcher eine das Gefäss (2) nach oben hin zumindest teilweise überdeckende Deckwand (321) aufweist, welche gemeinsam mit dem Gefäss (2) einen Gefässinnenraum (23) begrenzt,
wobei am Deckel oder am Gefäss ausserhalb des Gefässinnenraums (23) ein Ausgiesser (328) ausgebildet ist,
**dadurch gekennzeichnet, dass**
der Deckel (3) eine zwischen der Kolbenstange (41) und dem Ausgiesser (328) in der Deckwand (321) angeordnete Ausgiessöffnung (37) aufweist, welche eine Verbindung zwischen dem Gefässinnenraum (23) und dem Ausgiesser (328) bildet, um Flüssigkeit durch die Ausgiessöfinung (37) hindurch über den Ausgiesser (328) aus dem Gefäss (2) auszugiessen, und
dass am Deckel (3) oberhalb der Deckwand (321) ein sich quer zur Kolbenstange (41) erstreckender, langgestreckter Hebel (33) um eine horizontale Achse schwenkbar angebracht ist, wobei der Hebel (33) im Bereich seines vorderen Endes einen Verschlusskörper (36) aufweist, um die Ausgiessöffnung (37) zu verschliessen, und im Bereich seines hinteren, der Ausgiessöffnung (37) abgewandten Endes einen Betätigungsbereich (331) aufweist, um den Hebel (33) durch Druck mit einem Finger eines Benutzers von einer ersten Stellung, in welcher der Verschlusskörper (36) die Ausgiessöffnung (37) verschliesst, in eine zweite Stellung, in welcher der Verschlusskörper (36) die Ausgiessöffnung (37) freigibt, zu verschwenken.

2. Getränkebereiter nach Anspruch 1, wobei der Hebel (33) in Richtung seiner ersten Stellung federbelastet ist.

3. Getränkebereiter nach Anspruch 2, aufweisend eine Druckfeder (34), die in einem dem Ausgiesser (328) abgewandten Bereich des Deckels (3) zwischen dem Hebel (33) und der Deckwand (321) angeordnet ist, um den Hebel (33) in Richtung seiner ersten Stellung mit einer Federkraft, zu beaufschlagen.

4. Getränkebereiter nach Anspruch 3, wobei in der Deckwand (321) eine topfförmige, sich zum Gefässinneren (23) hin erstreckende Vertiefung (324) ausgebildet ist, in welche hinein sich die Druckfeder (34) erstreckt.

5. Getränkebereiter nach einem der vorhergehenden Ansprüche, wobei der Hebel (33) eine Durchgangsöffnung aufweist, durch, welche hindurch sich die Kolbenstange (41) erstreckt.

6. Getränkebereiter nach einem der vorhergehenden Ansprüche, wobei der Hebel (33) eine sich quer zur Längsrichtung des Hebels erstreckende Lagerachse oder zwei koaxial angeordnete, sich quer zur Längsrichtung des Hebels erstreckende Lagerzapfen (336) aufweist, wobei, der Deckel (3) zwei einander gegenüberliegende, maulförmige Lagerelemente (329) zur Aufnahme der Lagerachse bzw. der Lagerzapfen (336) aufweist, und wobei die Lagerachse bzw. die Lagerzapfen, (336) unter Überwindung einer, elastischen Federkraft in die Lagerelemente (329) einklinkbar sind.

7. Getränkebereiter nach einem der vorhergehenden Ansprüche, wobei der Verschlusskörper (36) aus einem Material gefertigt ist, welches weicher ist als das Material des restlichen Hebels (33).

8. Getränkebereiter nach einem der vorhergehenden Ansprüche, wobei der Deckel (3) eine sich vertikal nach unten erstreckende umlaufende Schürze (325) aufweist, welche sich in den Gefässinnenraum (23) hinein erstreckt und an deren Aussenseite ein umlaufendes Dichtelement (35) angeordnet ist, welches dichtend innen an der Seitenwand (21) des Gefässes (2) anliegt.

9. Getränkebereiter nach einem der vorhergehenden Ansprüche, wobei die Deckwand (321) des Deckels (3) im Wesentlichen eben ausgebildet ist und in einem die Ausgussöffnung (37) umgebenden Bereich ein nach oben vorstehender Rückhaltesteg (322) ausgebildet ist, welcher sich ausgehend vom Ausgiesser (328) teilweise um die Ausgiessöfkung (37) herum erstreckt, um vom Ausgiesser (328) her zurücklaufende Flüssigkeit im Bereich der Ausgiessöfnung (37) zurückzuhalten.

10. Getränkebereiter nach einem der vorhergehenden Ansprüche, wobei der Deckel (3) ein Deckelunterteil (32) umfasst, welches die den Gefässinnenraum (23) begrenzende Deckwand (321) bildet, und wobei der Deckel ein davon getrennt ausgebildetes, das Deckelunterteils (32) und den Hebel (33) zumindest teilweise überdeckendes Deckeloberteil (31) umfasst, und wobei an einem der Deckelteile ausgewählt aus Deckelunterteil (32) und Deckeloberteil (31) eine zylindrische Führungshülse (312) für die Kolbenstange (41) ausgebildet ist, welche derart im anderen Deckelteil gehalten ist, dass die Führungshülse (312) gegen eine seitliche Kippbewegung gesichert ist.

11. Getränkebereiter nach Anspruch 10, wobei die Führungshülse (312) mit dem anderen Deckelteil verrastbar ist.

12. Getränkebereiter nach Anspruch 10 oder 11, wobei die Führungshülse (312) einstückig mit den Deckeloberteil (31) ausgebildet ist und sich vertikal nach unten durch die den Gefässinnenraum (23) begrenzende Deckwand (321) hindurch in den Gefässinnenraum (23) hinein erstreckt, und wobei zwischen der Führungshülse (312) und der Deckwand (321) eine lösbare Rastverbindung (315) ausgebildet ist.

## Claims

1. A beverage maker, comprising
an upwardly open, substantially cylindrical vessel (2) having a vessel bottom (22) and a circumferential side wall (21);
a filter piston (4) vertically displaceable in the vessel (2), having a piston rod (41) to whose upper end a grip element (42) is attached, and to whose lower end a plunger-filter (43) is attached, which latter is suitable for allowing the passage of liquid and, at the same time, for retaining solids;
a lid (3), which is passed through by the piston rod (41) and has a top wall (321) which at least partially covers the vessel (2) in the upward direction and which, jointly with the vessel (2), delimits a vessel interior (23).
wherein, on the lid or on the vessel, outside the vessel interior (23), a spout (328) is configured,
**characterized in that**
the lid (3) has a pouring opening (37), which is disposed between the piston rod (41) and the spout (328) in the top wall (321) and which forms a connection between the vessel interior (23) and the spout (328) in order to pour liquid out of the vessel (2) through the pouring opening (37) by means of the spout (328), and
**in that** an elongated lever (33), extending transversely to the piston rod (41), is attached to the lid (3) above the top wall (321) pivotably about a horizontal axis, the lever (33) having a closure body (36) in the region of its front end for closing the pouring opening (37), and the lever having an actuating region (331) in the region_of its rear end, facing away from the pouring opening (37), in order to pivot the lever (33), by virtue of pressure exerted by a finger of the user, from a first position, in which the closure body (36) closes the pouring opening (37), into a second position, in which the closure body (36) frees the pouring opening (37).

2. The beverage maker as claimed in claim 1, wherein the lever (33) is spring-loaded in the direction of its first position.

3. The beverage maker as claimed in claim 2, comprising a compression spring (34) which is disposed in a region of the lid (3), facing away from the spout (328), between the lever (33) and the top wall (321) in order to subject the lever (33) to a spring force in the direction of its first position.

4. The beverage maker as claimed in claim 3, wherein a cup-shaped depression (324), extending towards the vessel interior (23), is configured in the top wall (321), into which depression the compression spring (34) extends.

5. The beverage maker as claimed in one of the preceding claims, wherein the lever (33) has a through opening, through which the piston rod (41) extends.

6. The beverage maker as claimed in one of the preceding claims, wherein the lever (33) has a bearing shaft extending transversely to the longitudinal direction of the lever, or two coaxially arranged bearing journals (336) extending transversely to the longitudinal direction of the lever, wherein the lid (3) has two mutually opposing, jaw-shaped bearing elements (329) for the reception of the bearing shaft or bearing journals (336), and wherein the bearing shaft or bearing journals (336), in surmounting an elastic spring force, can be clicked into the bearing elements (329).

7. The beverage maker as claimed in one of the preceding claims, wherein the closure body (36) is made of a material which is softer than the material of the rest of the lever (33).

8. The beverage maker as claimed in one of the preceding claims, wherein the lid (3) has a circumferential skirt (325), which extends vertically downward and extends into the vessel interior (23), and on whose outer side there is disposed a circumferential sealing element (35), which bears sealingly against the inner side of the side wall (21) of the vessel (2).

9. The beverage maker as claimed in one of the preceding claims, wherein the top wall (321) of the lid (3) is configured substantially flat, and in a region surrounding the pouring opening (37) there is configured an upwardly protruding retaining web (322), which, starting from the spout (328), extends partially around the pouring opening (37) in order to retain in the region of the pouring opening (37) liquid running back from the spout (328).

10. The beverage maker as claimed in one of the preceding claims, wherein the lid (3) comprises a lid bottom part (32), which forms the top wall (321) delimiting the vessel interior (23), and wherein the lid comprises a separately configured lid top part (31), which at least partially covers the lid bottom part (32) and the lever (33), and wherein on one of the lid parts; selected from lid bottom part (32) and lid top part (31), there is configured a cylindrical guide sleeve (312) for the piston rod (41), which is held in the other lid part such that the guide sleeve (312) is secured against a lateral tilting motion.

11. The beverage maker as claimed in claim 10, wherein the guide sleeve (312) can be latched to the other lid part.

12. The beverage maker as claimed in claim 10 or 11, wherein the guide sleeve (312) is configured integrally with the lid top part (31) and extends vertically downward into the vessel interior (23) through the top wall (321) delimiting the vessel interior (23), and wherein a releasable latching connection (315) is configured between the guide sleeve (312) and the top wall (321).

## Revendications

1. Dispositif de préparation de boissons comprenant :
un récipient (2) ouvert vers le haut, sensiblement cylindrique, avec un fond de récipient (22) et une paroi latérale périphérique (21) ;
un piston filtrant (4) déplaçable verticalement dans le récipient (2) avec une tige de piston (41), à l'extrémité supérieure de laquelle est monté un élément de préhension (42) et à l'extrémité inférieure de laquelle est monté un filtre piston (43), qui est approprié pour permettre le passage de liquide et retenir les matières solides ;
un couvercle (3) qui est traversé par la tige de piston (41) et qui présente une paroi de recouvrement (321) recouvrant au moins en partie le récipient (2) vers le haut, laquelle limite,
conjointement avec le récipient (2), un espace interne de récipient (23),
un bec verseur (328) étant réalisé sur le couvercle ou sur le récipient en dehors de l'espace interne de récipient (23),
**caractérisé en ce que**
le couvercle (3) présente une ouverture de déversement (37) disposée entre la tige de piston (41) et le bec verseur (328) dans la paroi de recouvrement (321), laquelle ouverture forme une liaison entre l'espace interne du récipient (23) et le bec verseur (328), afin de verser du liquide à travers l'ouverture de déversement (37) par le biais du bec verseur (328) hors du récipient (2),
et
**en ce qu'**un levier (33) s'étendant longitudinalement, s'étendant transversalement à la tige de piston (41), est monté sur le couvercle (3) au-dessus de la paroi de recouvrement (321) de manière à pouvoir pivoter autour d'un axe horizontal, le levier (33) présentant dans la région de son extrémité avant un corps de fermeture (36), afin de fermer l'ouverture de déversement (37), et présentant dans la région de son extrémité arrière opposée à l'ouverture de déversement (37) une région d'actionnement (331) afin de faire pivoter le levier (33) par pression du doigt par un utilisateur d'une première position dans laquelle le corps de fermeture (36) ferme l'ouverture de déversement (37) dans une deuxième position dans laquelle le corps de fermeture (36) libère l'ouverture de déversement (37).

2. Dispositif de préparation de boissons selon la revendication 1, dans lequel le levier (33) est sollicité par ressort dans la direction de sa première position.

3. Dispositif de préparation de boissons selon la revendication 2, présentant un ressort de compression (34) qui est disposé dans une région du couvercle (3) opposée au bec verseur (328) entre le levier (33) et la paroi de recouvrement (321), afin de solliciter le levier (33) dans la direction de sa première position avec une force de ressort.

4. Dispositif de préparation de boissons selon la revendication 3, dans lequel un renfoncement (324) en forme de pot, s'étendant jusqu'à l'intérieur du récipient (23), est réalisé dans la paroi de recouvrement (321), le ressort de compression (34) s'étendant à l'intérieur dudit renfoncement.

5. Dispositif de préparation de boissons selon l'une quelconque des revendications précédentes, dans lequel le levier (33) présente une ouverture de passage à travers laquelle s'étend la tige de piston (41).

6. Dispositif de préparation de boissons selon l'une quelconque des revendications précédentes, dans lequel le levier (33) présente un axe de palier s'étendant transversalement à la direction longitudinale du levier ou deux tourillons de palier (336) s'étendant transversalement à la direction longitudinale du levier et disposés coaxialement, le couvercle (3) présentant deux éléments de palier (329) opposés en forme de mors pour recevoir l'axe de palier ou les tourillons de palier (336), et l'axe de palier ou les tourillons de palier (336) pouvant être encliquetés en surmontant une force de ressort élastique dans les éléments de palier (329).

7. Dispositif de préparation de boissons selon l'une quelconque des revendications précédentes, dans lequel le corps de fermeture (36) est fabriqué en un matériau qui est plus tendre que le matériau du reste du levier (33).

8. Dispositif de préparation de boissons selon l'une quelconque des revendications précédentes, dans lequel le couvercle (3) présente une jupe (325) périphérique s'étendant verticalement vers le bas, qui s'étend dans l'espace interne du récipient (23), et sur le côté extérieur de laquelle est disposé un élément d'étanchéité périphérique (35) qui s'applique de manière hermétique à l'intérieur contre la paroi latérale (21) du récipient (2).

9. Dispositif de préparation de boissons selon l'une quelconque des revendications précédentes, dans lequel la paroi de recouvrement (321) du couvercle (3) est réalisée de manière sensiblement plane et une nervure de retenue (322) saillant vers le haut est réalisée dans une région entourant l'ouverture de déversement (37), laquelle s'étend depuis le bec verseur (328) en partie tout autour de l'ouverture de déversement (37), afin de retenir le liquide revenant depuis le bec verseur (328) dans la région de l'ouverture de déversement (37).

10. Dispositif de préparation de boissons selon l'une quelconque des revendications précédentes, dans lequel le couvercle (3) comprend une partie inférieure de couvercle (32), qui forme la paroi de recouvrement (321) limitant l'espace interne du récipient (23), le couvercle comprenant une partie supérieure de couvercle (31) réalisée séparément de celui-ci, recouvrant au moins en partie la partie inférieure de couvercle (32) et le levier (33), et une douille de guidage cylindrique (312) pour la tige de piston (41) étant réalisée sur l'une des parties du couvercle choisie parmi la partie inférieure de couvercle (32) et la partie supérieure de couvercle (31), laquelle douille de guidage est retenue dans l'autre partie de couvercle de telle sorte que la douille de guidage (312) soit protégée contre un mouvement de basculement latéral.

11. Dispositif de préparation de boissons selon la revendication 10, dans lequel la douille de guidage (312) peut être encliquetée avec l'autre partie de couvercle.

12. Dispositif de préparation de boissons selon la revendication 10 ou 11, dans lequel la douille de guidage (312) est réalisée d'une seule pièce avec la partie supérieure de couvercle (31) et s'étend verticalement vers le bas à travers la paroi de recouvrement (321) limitant l'espace interne du récipient (23) dans l'espace interne du récipient (23), et une connexion par encliquetage (315) est réalisée entre la douille de guidage (312) et la paroi de recouvrement (321).
